# EUROPEAN PATENT SPECIFICATION

(11) **EP 1 680 845 B1**
(45) Date of publication and mention of the grant of the patent: **03.12.2014**
(21) Application number: 04795274.2
(22) Date of filing: 13.10.2004
(51) Int. Cl.: H02G 3/04

(54) **HINGE FOR CABLE THROUGH COVER**
SCHARNIER FÜR KABELKANALDECKEL
CHARNIERE POUR COUVERCLE DE CHEMIN DE CABLES

(30) Priority: 05.11.2003 US 703157; 10.02.2004 US 776678; 05.05.2004 US 840698
(43) Date of publication of application: 19.07.2006
(73) Proprietor: ADC Telecommunications, Inc., Eden Prairie, MN 55344-2252 (US)
(72) Inventor: HERZOG, Daniel, M., Chanhassen, MN 55317 (US); SJODIN, Chad, J., Shakopee, MN 55379 (US); RAPP, David, E., Eden Prairie, MN 55347 (US)
(74) Representative: Bohnenberger, Johannes
(86) International application number: PCT/US2004/034087
(87) International publication number: WO 2005/048430

(56) References cited:
- EP-A- 1 033 800
- CA-A- 582 361
- US-A- 4 406 379
- US-A1- 2003 016 931

## Description

### Technical Field

The present invention relates to systems and methods for the management and routing of telecommunication cables, and, more particularly, to covers for cable trough members.

### Background

In the telecommunications industry, the use of optical fibers for signal transmissions is accelerating. With the increased utilization of optical fiber systems, optical fiber cable management requires industry attention.

One area of optical fiber management that is necessary is the routing of optical fibers from one piece of equipment to another. For example, in a telecommunications facility, optical fiber cables may be routed between fiber distribution equipment and optical line terminating equipment. In buildings and other structures that carry such equipment, the cable routing can take place in concealed ceiling areas or in any other manner to route cables from one location to another.

When routing optical fibers and other cables such as copper wires, it is desirable that a routing system will be readily modifiable and adaptable to changes in equipment needs. Accordingly, such routing systems include a plurality of components, such as trough members and couplers, for defining the cable routing paths. The trough members are joined together by couplings. U.S. Patent Nos. 5,067,678; 5,316,243; and 5,752,781 teach cable routing systems that include a plurality of trough members and couplers.

Various concerns arise in the use of trough members. One concern is that trough members are typically U-shaped and therefore have open tops through which debris and other undesirable material, such as tools, hardware, and other debris, can fall onto the fibers running through the trough members. Further, even if the trough members include covers to close the open tops, it may be necessary to periodically gain access to the interior portions of the trough members to, for example, add or remove fibers.

It is therefrom desirable to provide cover for trough members that reduce debris from entering interior portions of the trough members while still allowing for access to the interior portions of the trough members.

Further information pertaining to the prior art can be found in US patent application publication 2003/0016931 that teaches a cable trough cover in accordance with the preamble of claim 1.

EP 1 033 800 teaches a reenterable wireway system that includes a channel-shaped slotted duct, an integrally co-extruded U-shaped cover assembly and discrete latches. The duct has an elongate base and two substantially parallel duct walls extending generally perpendicularly from the base with each of the walls disposed adjacent respective longitudinal edges thereof. The duct walls include at least a pair of adjacent duct fingers which define a slot permitting selective routing of wires of the bundle. The cover assembly has an elongate planar center element with a plurality of hinges and a plurality of corner elements, which have a first component co-planar with the central element, and a second component depending normal to the first component disposed. The orientation of the first and second components may be changed when the cover is molded to be biased in a "remain open" position. A plurality of discrete latches are disposed at spaced locations on each respective second component having a locking mechanism which cooperates with the slot between adjacent duct fingers to secure the cover assembly to the duct. Each side of the cover assembly is removably secured to the duct, and the cover assembly may be pivoted in either direction to an open position by unlatching the locking mechanisms disposed on a longitudinal side of the cover assembly and pivoting the cover assembly about an opposite hinge.

US patent 4,406,379 teaches a cable manager for concealing and controlling electrical and telephone cables in an office environment. The cable manager includes a base housing member and a hinged top closure member. A plurality of leaf springs releasably retain the top closure in either the open or closed position and hidden access to the interior of the closed cable manager is provided along its entire length. At a side of a top closure opposite a short front wall is an elongated cylindrical groove which carries at its center an elongated cylindrical pivot member or hinge in the form of rib which fits into the C-shaped hinge member on an upper extension of a rear wall to form a hinged connection between a top cover and a base member of the cable manager. The elongated cylindrical rib is supported within the cylindrical groove by a neck member which co-acts with end edges of the C-shaped hinge member on the rear extension to form stop members which limit the open and closed positions of the top closure member. Additional stop means are provided in the form of an extension on the cylindrical groove which co-acts with the underside of the rear wall extension to maintain a planar portion of the top closure in a horizontal position when the top closure is in its closed position.

CA 582361 teaches a hinge formed of an outer and an inner hinge member, said outer hinge member having in sectional profile the shape of an arc with a peripheral angle range exceeding 180°, said inner hinge member having a sectional profile of circular shape retained in sliding engagement within and being turnable about the axis of said arc, said inner hinge member extending through the mouth of said arc, and the turning movement of said inner hinge member being limited by the engagement with the extreme points of the arc.

### Summary

The present invention provides a cover and hinge assembly in accordance with independent claim 1 as well as a method of covering a trough member in accordance with independent claim 9. Preferred embodiments of the invention are reflected in the dependent claims.

The claimed invention can be better understood in view of the embodiments and examples described and illustrated in the present disclosure, *viz.* in the present specification and drawings. In general, the present disclosure reflects preferred embodiments of the invention. The attentive reader will note, however, that some aspects of the disclosed embodiments and examples extend beyond the scope of the claims. To the respect that the disclosed embodiments and examples indeed extend beyond the scope of the claims, the disclosed embodiments and examples are to be considered supplementary background information and do not constitute definitions of the invention *per se*.

Embodiments of the present disclosure are directed to systems and methods for the management and routing of telecommunication cables and, more particularly, to covers and hinge clips of a cover and hinge assembly for cable trough members. Generally, the covers can be coupled with the hinge clips to the trough members to cover the trough members. In addition, the covers can be pivoted with respect to the trough members to provide access to the interior portions of the trough members.

A system includes at least one hinge clip coupled to a trough member to allow the cover to pivot from an open position to a closed position. A capture clip can also be provided on the trough member to hold the cover in the closed position.

In accordance with one aspect, a system includes two cover portions, which are each coupled to opposite sidewalls of a trough member by hinge clips. Each cover portion can extend partially across an open portion of the trough member, and the cover portions, in the closed position, can define therebetween a slot.

One embodiment of a hinge clip includes first and second structures for limiting the amount of rotation of the cover beyond the open and closed positions.

One embodiment of a capture clip includes a seat for capturing a portion of the cover when the cover is in the closed position.

One embodiment of a cover includes a pivot member and a capture member. In example embodiments, the capture member defines an elbow to be received in the seat of the capture clip.

The above summary of embodiments made in accordance with the present disclosure is not intended to describe each disclosed embodiment or every implementation of the present disclosure. The figures and the detailed description that follow more particularly exemplify embodiments in accordance with the present disclosure. While certain embodiments will be illustrated and described, the invention is not limited to use in such embodiments.

### Brief Description of the Drawings

Figure 1 is a perspective view of an embodiment of a trough system with a cover in a closed position made in accordance with the present disclosure.
Figure 2 is an enlarged view of a portion of the trough system shown in Figure 1.
Figure 3 is an enlarged view of another portion of the trough system shown in Figure 1.
Figure 4 is a perspective view of the trough system of Figure 1 with the cover in an open position.
Figure 5 is an enlarged view of a portion of the trough system shown in Figure 4.
Figure 6 is a perspective view of an embodiment of a hinge clip made in accordance with the present disclosure.
Figure 7 is another perspective view of the hinge clip of Figure 6.
Figure 8 is an end view of the hinge clip of Figure 6.
Figure 9 is a perspective view of an embodiment of a capture clip made in accordance with the present disclosure.
Figure 10 is an end view of the capture clip of Figure 9.
Figure 11 is a perspective view of an embodiment of a cover made in accordance with the present disclosure.
Figure 12 is an end view of the cover of Figure 11.
Figure 13 is a bottom view of the cover of Figure 11.
Figure 14 is a perspective view of another embodiment of a trough system with covers in closed positions made in accordance with the present disclosure.
Figure 15 is an enlarged view of a portion of the trough system shown in Figure 14.
Figure 16 is a perspective view of the trough system of Figure 14 with the covers in open positions.
Figure 17 is an enlarged view of a portion of the trough system shown in Figure 16.
Figure 18 is a perspective view of another embodiment of a cover made in accordance with the present disclosure.
Figure 19 is an end view of the cover of Figure 18.
Figure 20 is a bottom view of the cover of Figure 18.
Figure 21 is a perspective view of a trough system illustrating the entire cover of Figure 1.
Figure 22 is a perspective view of the trough system of Figure 21 with the cover in an open position.
Figure 23 is another perspective view of the trough system of Figure 22.
Figure 24 is a first perspective view of an alternative embodiment of a hinge clip.
Figure 25 is a second perspective view of the hinge clip of Figure 24.
Figure 26 is an end view of the hinge clip of Figure 24.
Figure 27 is an end view of a portion of a trough system including the hinge clip of Figures 24 through 26, and showing the cover in the closed position.
Figure 28 shows an end view of a portion of a trough system like the system of Figure 27, with the cover in the open position.
Figure 29 is a perspective view of an alternative embodiment of a capture clip.
Figure 30 is an end view of the capture clip of Figure 29.
Figure 31 is a perspective view of another embodiment of a cover.
Figure 32 is an end view of the cover of Figure 31.
Figure 33 is a bottom view of the cover of Figure 31.
Figure 34 is a perspective view of another embodiment of a trough system with a cover in a closed position.
Figure 35 is an enlarged view of a portion of the trough system of Figure 34.
Figure 36 is a perspective view of a trough system illustrating the cover in an open position.
Figure 37 is a perspective view of the trough system of Figure 36 with the cover in a closed position.

### Detailed Description of the Preferred Embodiment

Embodiments of the present invention are directed to cover and hinge assemblies for cable trough members. Generally, the covers can be coupled to the trough members to cover the trough members. In addition, the covers can be pivoted with respect to the trough members to provide access to the interior portions of the trough members. As used herein, the term trough member is used to refer to any trough, fitting, railway, raceway, or similarly configured component including any number of ends.

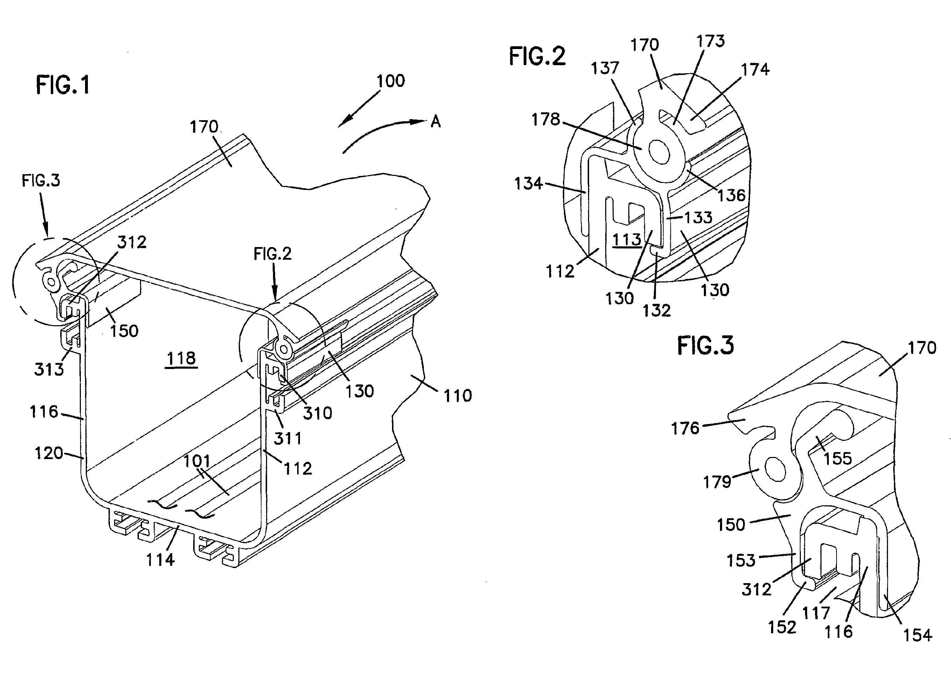

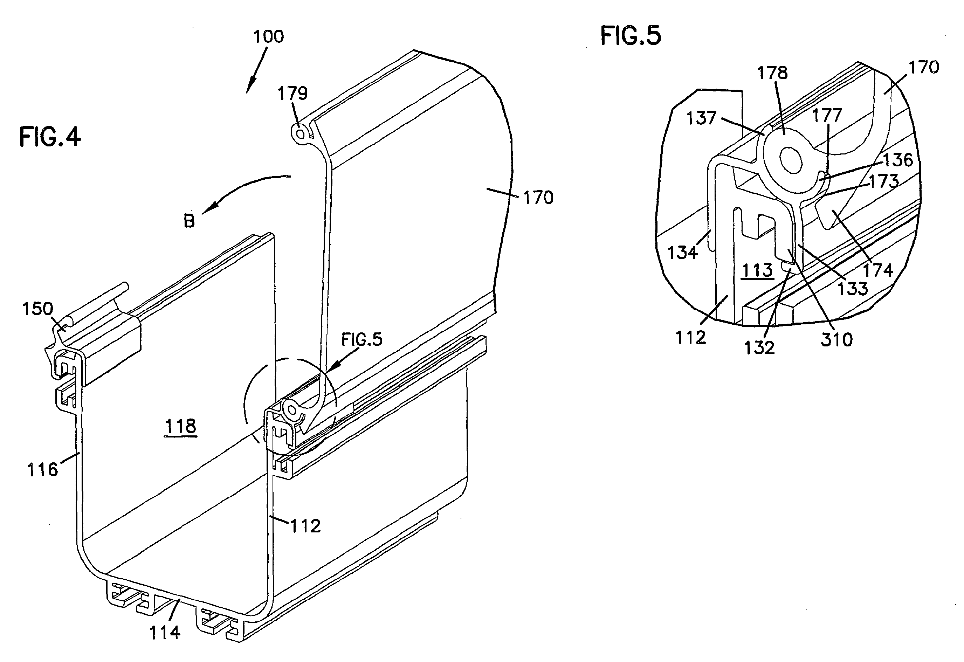

Referring now to Figures 1-5, an example embodiment of a cable trough system 100 is shown. The system 100 generally includes a trough member 110, a hinge clip 130, a capture clip 150, and a cover 170. In preferred embodiments, the clips 130 and 150 can be coupled to the trough member 110 to hold the cover 170, and the hinge clip 130 can allow the cover 170 to pivot relative to trough member 110 between closed and open positions. For example, as described further below, the cover 170 is illustrated in the closed position in Figures 1-3 and in the open position in Figures 4 and 5.

The example trough member 110 includes first and second sidewalls 112 and 116 coupled to a bottom wall 114 generally forming a trough with an interior space 118 through which cables such as fiber (e.g., fiber cables 101 shown in Figure 1) can be run. The trough member 110 also includes lips 310 and 311 creating a first slot 113 and lips 312 and 313 creating a second slot 117 positioned on the first and second sidewalls 112 and 116, respectively. The lips 310, 311 and 312, 313 and first and second slots 113 and 117 created thereby can be used to allow components to be attached to the trough member 110, as described further below.

The trough member 110 extends lengthwise from a first end 120 to a second end (not shown). The trough member 110 can be of varying lengths and widths, and can be coupled to other trough members or similar structures to form a cable trough system.

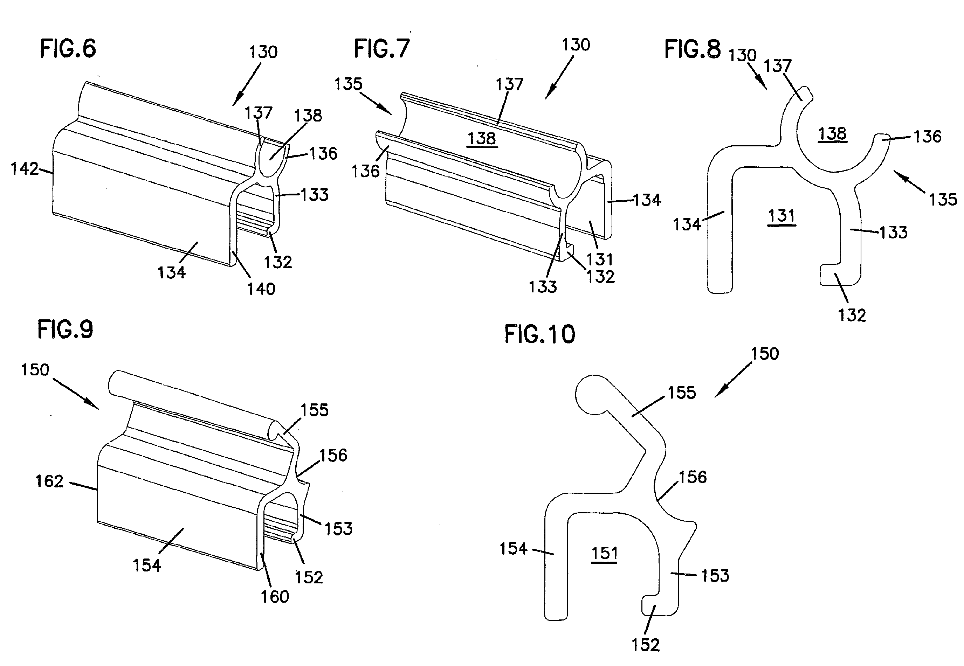

The example hinge clip 130, shown in more detail in Figures 2, 5, and 6-8, includes first and second members 133 and 134 creating a channel 131 to receive the lip 310, and a clip portion 132 extends partially into the first slot 113 to couple the hinge clip 130 to the first sidewall 112 of the trough member 110. The hinge clip 130 further includes a hinge portion 135 having first and second arms 136 and 137 creating a socket 138.

The hinge clip 130 can be coupled to the trough member 110 as shown in Figures 1, 2, 4, and 5, so that the channel 131 receives the lip 310, and the clip portion 132 extends partially into the slot 113. Preferably, the hinge clip 130 is coupled to the sidewall 112 by snapping the hinge clip 130 onto a mid-portion of the trough member 110. This can be accomplished by positioning the channel 131 adjacent to the end of the sidewall 112, and applying a downward force on the hinge clip 130 to cause the first member 133 to bow out slightly with respect to the second member 134 to allow the lip 310 to be received in the channel 131 and to allow the clip portion 132 to extend partially into the slot 113.

In alternative embodiments, the hinge clip 130 can be configured to be coupled to the sidewall 112 by sliding the hinge clip 130 onto an end, such as first end 120 of the trough member 110, and into the desired position on the trough member 110. If the hinge clip 130 is configured to be slid onto the trough member 110, additional structure can be provided for fixing the hinge clip 130 in a desired position on the trough member 110 such as, for example, screws or bolts, as described further below.

The hinge clip 130 can be removed from the trough member 110 similarly, either by forcing the clip portion 132 out of the slot 113 and then removing the hinge clip 130 from the trough member 110, or, alternatively, by sliding the hinge clip 130 off an end of the trough member 110.

The hinge clip 130 extends from a first end 140 to a second end 142. In preferred embodiments, the length of the hinge clip 130 (i.e., the distance between ends 140 and 142) is between 2.5 and 12.7 cm (1 and 5 inches). In a preferred embodiment, the length is approximately 4.4 cm (1.75 inches). The hinge clip 130 is preferably molded from a plastic material such as, for example, a synthetic thermoplastic polymer such as an acrylonitrile-butadiene-styrene (ABS)/polycarbonate blend. In a preferred embodiment, the hinge clip 130 is injection molded and varies in thickness from one end to the other to allow the molded clip to be stripped from the mold. Other manufacturing methods and materials can also be used.

The example capture clip 150, shown in more detail in Figures 3, 9, and 10, includes first and second members 153 and 154, creating a channel 151 to receive the lip 312, and a clip portion 152 extending partially with the slot 117 to couple the hinge clip 150 to the second sidewall 116 of the trough member 110. The hinge clip 150 further includes a ramp portion 155 and a seat 156, as described further below.

The capture clip 150 can be coupled to the trough member 110, as shown in Figures 1 and 3, in a manner similar to that described above with respect to the hinge clip 130. Specifically, the capture clip 150 can be coupled to the sidewall 116 by snapping the capture clip 150 onto the sidewall 116 so that the channel 151 receives the lip 312, and the clip portion 152 extends partially into the slot 117. In alternative embodiments, the capture clip 150 can be configured to be slid onto an end, such as first end 120, and into the desired position on the trough member 110. The capture clip 150 can be removed from the trough member 110 similarly, either by forcing the clip portion 152 out of the slot 117 and then removing the capture clip 150 from the trough member 110, or, alternatively, by sliding the capture clip 150 off an end of the trough member 110.

The capture clip 150 extends from a first end 160 to a second end 162. In preferred embodiments, the length of the capture clip 150 (i.e., the distance between ends 160 and 162) is between 2.5 and 12.7 cm (1 and 5 inches). In a preferred embodiment, the length is approximately 4.4 cm (1.75 inches). The capture clip 150 is preferably molded from a plastic material such as, for example, a synthetic thermoplastic polymer such as an acrylonitrile-butadiene-styrene (ABS)/polycarbonate blend. In a preferred embodiment, the capture clip 150 is injection molded and varies in thickness from one end to the other to allow the molded clip to be stripped from the mold. Other manufacturing methods and materials can also be used.

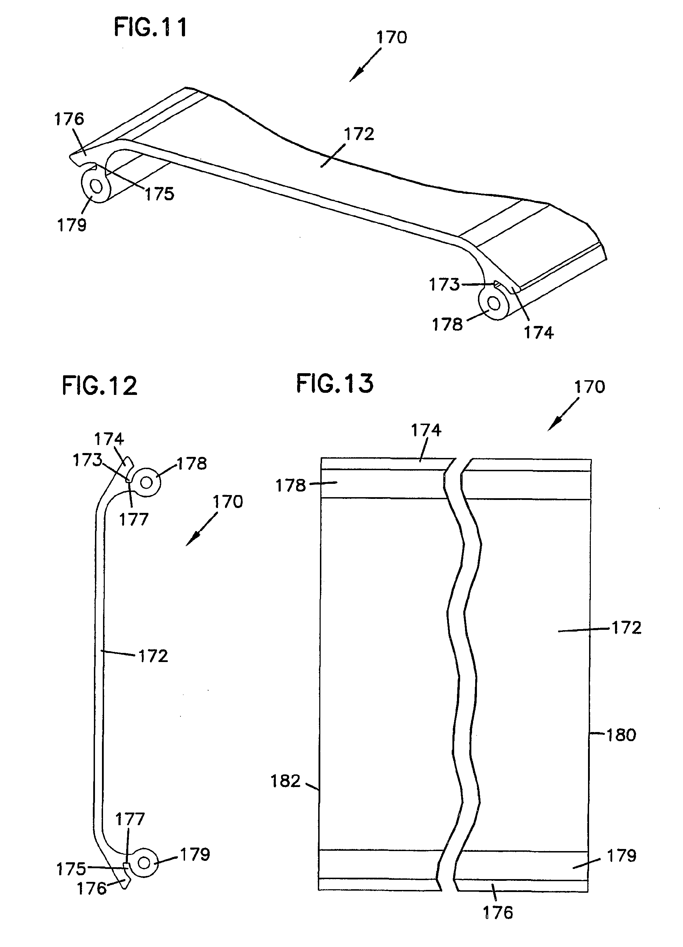

The example cover 170, shown in more detail in Figures 2, 3, 5, and 11-13, includes a main body 172 having first and second ends 174 and 176. As illustrated by the depicted example, the ends 174 and 176 are preferably, but need not be, angled with respect to the main body 172. The cover 170 includes pivot members 178 and 179 at each of the first and second ends 174 and 176. Each pivot member 178 and 179 can, for example, be in the form of cylindrical bead, rod, shaft, or other similar shape including a generally round outer circumference. Grooves 173 and 175 with ends 177 are formed generally between the ends 174 and 176 and the outer circumference of the pivot members 178 and 179.

Preferably the cover 170 extends from the first sidewall 112 to the second sidewall 116 to cover the open top of the trough member 110. Depending on the width of the trough member 110, a width of the cover 170 between ends 174 and 176 can be sized to cover the open top. In preferred embodiments, the width of cover 170 is 10, 15 or 30 cm (4, 6, or 12 inches), depending on the width of the trough member. The cover 170 extends lengthwise from a first end 180 to a second end 182. In preferred embodiments, the length of the cover 170 (i.e., the distance between ends 180 and 182) is between 0.6 and 2.4 m (2 and 8 feet). In a preferred embodiment, the length is approximately 1.8 m (6 feet). Successive covers 170 can be used end to end to cover trough members of longer length, and a cover 170 can be cut to other desired lengths. Like the trough member 110, the cover 170 is preferably extruded from a plastic material such as, for example, a synthetic thermoplastic polymer such as an acrylonitrile-butadiene-styrene (ABS)/polycarbonate blend, although other manufacturing methods (e.g., molding) and materials can also be used.

Referring again to Figures 1-3, the cover 170 is illustrated in the closed position. In this position, pivot member 178 of the cover 170 is positioned in the socket 138 of the hinge clip 130. In addition, pivot member 179 of the cover 170 is positioned in the seat 156 of the capture clip 150. In this position, the cover 170 extends over the open top of the trough member 110 and thereby protects any components (e.g., fiber cables) positioned in the interior space 118 of the trough member 110 from any debris dropped on the cover 170.

The cover 170 can be pivoted from the closed position to the open position. This can be accomplished by applying force in a direction A on the second end 176 of the cover 170, which causes the pivot member 179 to be released from the seat 156 of the capture clip 150. The cover 170 can then be pivoted about the pivot member 178 in the socket 138 of the hinge clip 130 in the direction A to the open position shown in Figures 4 and 5.

Referring again to Figures 4 and 5, in the open position, the first arm 136 of the socket 138 of the hinge portion 135 is received in the groove 173 of the cover 170 to define the open position. In addition, as the first arm 136 contacts end 177 of the groove 173, the cover 170 is prevented from pivoting further in the direction A, thereby maintaining the cover 170 in the open position and the pivot member 178 in the socket 138.

The cover 170 can also be pivoted once again in a direction B back to the closed position. As the cover 170 nears the closed position, the pivot member 179 contacts and rides along the ramp 155 of the capture clip 150, which directs the pivot member 179 into the seat 156. In addition, in a preferred embodiment, as the pivot member 179 rides along the ramp 155 of the capture clip 150, sidewall 116 that is coupled to the capture clip 150 bows inward slightly, allowing the pivot member 179 to clear the ramp 155 and drop into the seat 156. In this manner, a snug fit between the cover 170 and the capture clip 150 can be created, and the capture clip 150 can preferably maintain the cover 170 in the closed position. With the pivot member 179 in the seat 156, the cover 170 is once again in the closed position, as shown in Figures 1-3.

An example method of assembling the trough system 100 is as follows. Initially, the hinge clip 130 and the capture clip 150 are positioned on the trough member 110. This can be accomplished, as described above, preferably by snapping the hinge clip 130 and capture clip 150 onto the trough member 110 at the desired locations. Preferably, once the hinge clip 130 and capture clip 150 are positioned on the trough member 110, the clips 130 and 150 can be slid slightly with respect to the trough member 110 to further position the clips 130 and 150 as desired on the trough member 110.

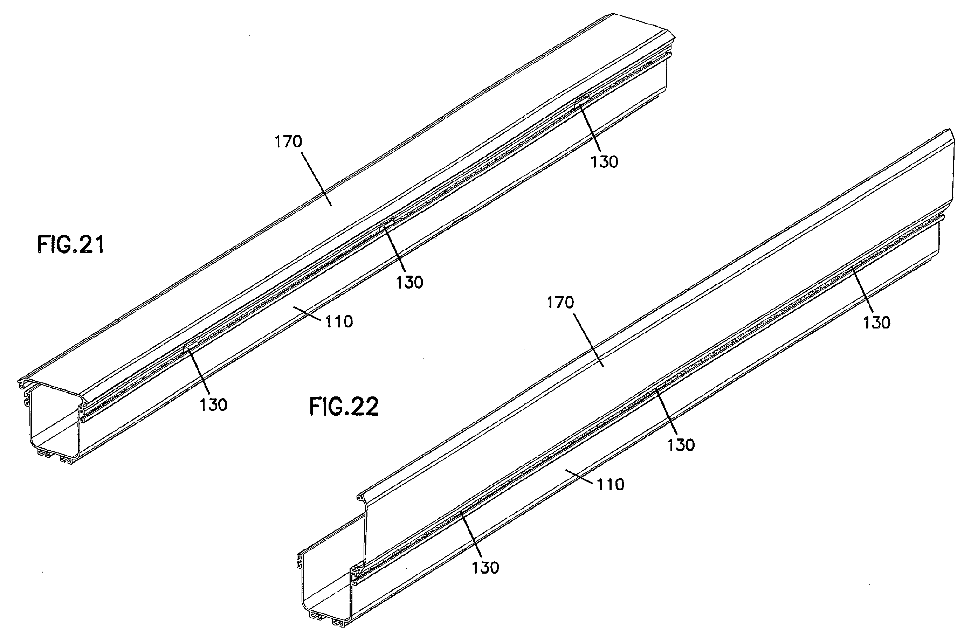

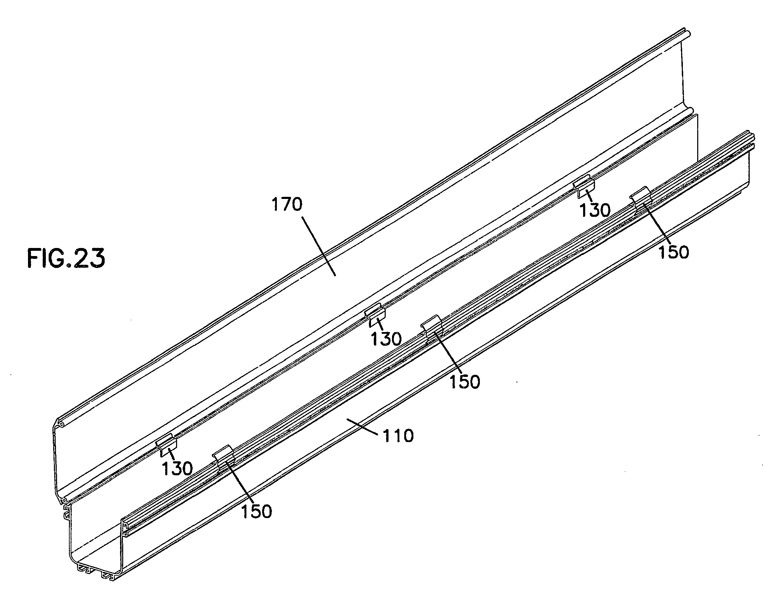

In preferred embodiments, multiple hinge clips 130 and capture clips 150 are used. For example, if a 1.8 m (6 foot) cover is to be used, preferably three hinge clips 130 and three capture clips 150 are positioned on opposite sidewalls of the trough member 110 at spaced intervals, as shown in Figures 21-23. More or fewer hinge and capture clips can also be used. In preferred embodiments, the hinge clips 130 and capture clips 150 are spaced at between approximately 30 and 90 cm (1 and 3 feet) intervals, more preferably at approximately 0.6 m (2 feet) intervals. Each hinge clip 130 can be positioned across from each capture clip 150 (as shown in the example of Figures 21-23), or the clips can be staggered as desired.

Once the hinge clips 130 and capture clips 150 are positioned on the trough member 110, the cover 170 can be placed over the open top of the trough member 110, and the cover 170 can be pressed downward toward the trough member 110 to snap the pivot member 178 into the sockets 138 of the hinge clips 130 and the pivot member 179 into the seats 156 of the capture clips 150.

Once the cover 170 is coupled to the trough member 110, the cover 170 can be pivoted between the closed and open positions as described above.

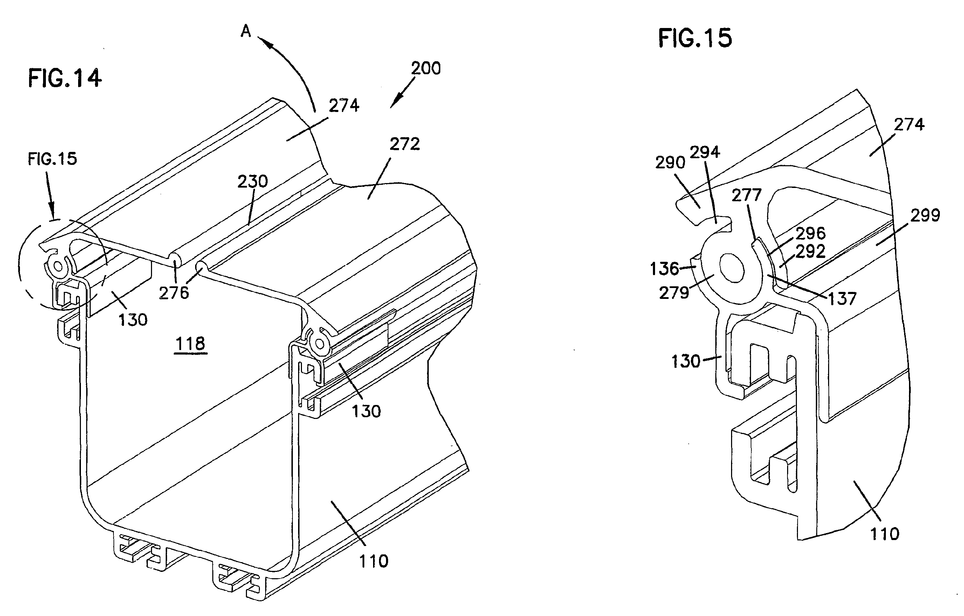

Referring now to Figures 14-20, another example embodiment of a trough system 200 is shown. The system 200, including hinge clip 130, is similar to the system 100, with the differences noted below.

Instead of a single cover (such as cover 170 provided in system 100), a split cover including cover portions 272 and 274 is provided. As shown in Figure 14, cover portions 272 and 274 each extend partially across the open top of the trough member 110. Although ends 276 of the cover portions 272 and 274 extend closed to one another, preferably a slot 230 is formed between ends 276, as described further below.

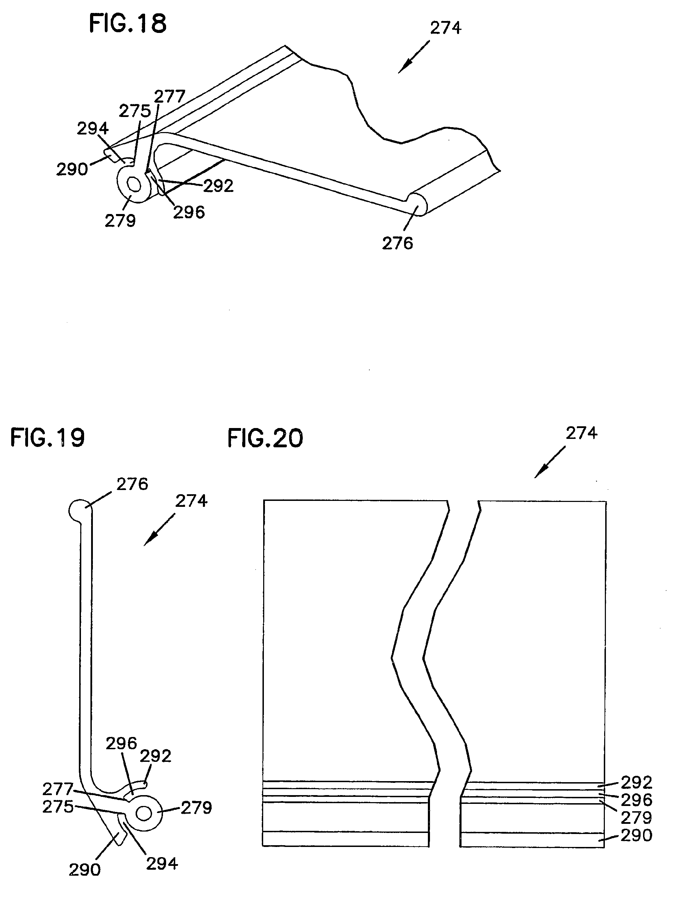

Referring now to Figures 18-20, the cover portion 274 is described in greater detail. A pivot member 279 (similar to pivot members 178 and 179) is positioned at an end 290 of the cover portion 274. In addition, a first groove 294 with end 275 is formed between an outer circumference of the pivot member 279 and the end 290 (similar to groove 173), and a second groove 296 with end 277 is formed between the pivot member 279 and a member 292.

Further, the end 276 of the cover portion 274 can be formed with a rounded surface (see Figures 14, 16, and 18-20) to minimize any sharp edges. This can be advantageous, for example, to minimize any wear on fiber cables if the cables are run through the slot 230 with the cover portions 272 and 274 in the closed position.

Referring again to Figures 14 and 15, the pivot member 279 of the cover portion 274 can be received in the socket 138 of the hinge clip 130. In the closed position as shown in Figures 14 and 15, the second arm 137 of the socket 138 contacts end 277 of the groove 296 to define the closed position.

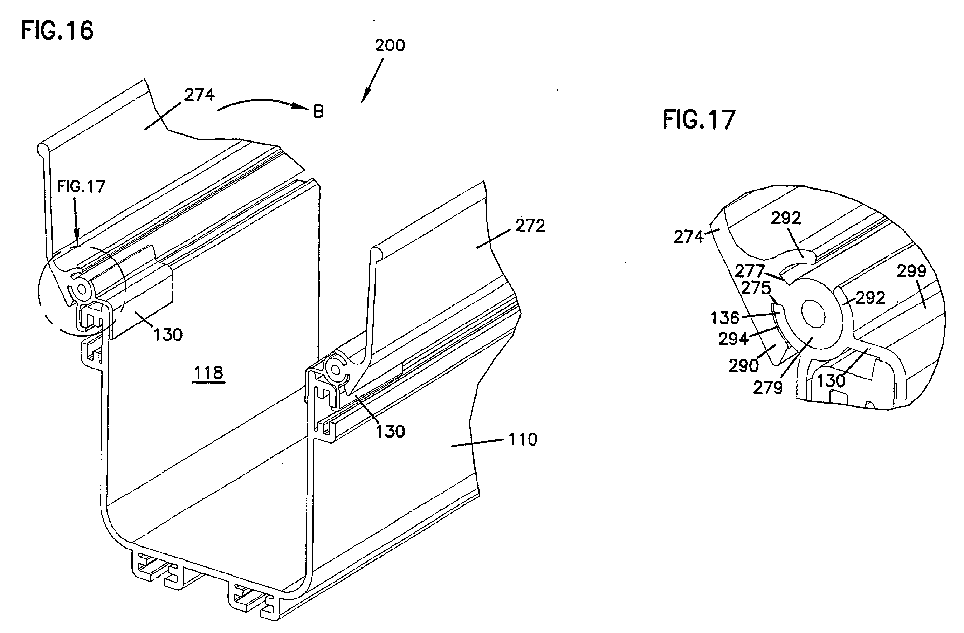

The cover portion 274 can be pivoted into the open position by applying force to the end 276 in the direction A. In the fully opened position, as shown in Figures 16 and 17, the first arm 136 of the socket 138 contacts end 275 of the groove 294 to define the open position and prevent the cover portion 274 from being pivoted further in the direction A.

The cover portion 274 can be pivoted back to the closed position by applying a force to pivot the cover portion 274 in the direction B. The cover portion 274 can be pivoted in the direction B, as described above, until the second arm 137 of the socket 138 contacts end 277 of the groove 296 in the closed position.

If, once in the close position as shown in Figures 14 and 15, sufficient additional force is applied to the cover portion 274 in the direction B, further pivoting of the cover portion 274 in the direction B is possible. However, this pivoting is limited as the member 292 contacts surface 299 of the hinge clip 130 (see Figure 15), at which point further pivoting in the direction B is preferably prevented. This may be desirable, for example, should a heavy object be dropped onto the cover portion 274. Although the cover portion 274 may deform slightly in the direction B until the member 292 contacts the surface 299 of the hinge clip 130, the cover portion 274 is preferably thereupon prohibited from further pivoting in the direction B, thereby preventing the object from entering the interior space 118 of the trough member 110.

The cover portion 272 is preferably configured as a mirror image of the cover portion 274 and functions in a similar manner. As shown, no capture clip 150 is used for system 200. Instead, an additional hinge clip 130 is provided to hold the pivot member of the cover portion 272.

In preferred embodiments, the slot 230 between cover portions 272 and 274 is less than 2.5 cm (1 inch), more preferably 1.9 cm (0.75 inch), and even more preferably approximately 1.3 cm (0.5 inch) or less. In this configuration, the slot 230 allows limited access to the interior space 118 of the trough member 110 without requiring that any covers be opened or removed. For example, additional fibers can be introduced into the interior space 118 of the trough member 110 by insertion through the slot 230 without requiring that either cover portions 272 or 274 be opened. However, the slot 230 is preferably small enough to prevent most material from entering the interior space 118 of the trough member 110 when cover portions 272 and 274 are in the closed positions.

An example method of assembling the system 200 is as follows.

First, the hinge clips 130 are positioned on the trough member 110 in a manner as described above. Then, the pivot members 279 of each of the cover portions 272 and 274 are inserted into the sockets 138 of the hinge clips 130 to couple the cover portions 272 and 274 to the trough member 110.

Each cover portion 272 and 274 can be opened and closed separately or in unison as described above.

The example cable trough systems 100 and 200 can exhibit a variety of advantages. For example, the hinge and capture clips can be coupled to existing trough members to allow pivoting covers to be added the trough members.

For example, the hinge and capture clips are preferably configured to snap onto the trough member without requiring the clips to be slid onto the trough member, and without requiring additional hardware such as screws or bolts to hold the clips in place on the trough member. However, in alternative embodiments, additional hardware can be used to, for example, lock the hinge and capture clips in place on the trough member. In other embodiments, the hinge and/or capture clips can be formed as an integral part of the trough member.

In addition, the cover is preferably configured to be easily snapped onto the hinge and capture clips without requiring the cover to be slid through the clips. This can be advantageous so that the cover can be easily coupled to the trough member.

The systems 100 and 200 described above can also be advantageous in that they can be configured to meet a variety of standards associated with cable trough systems. For example, the hinge and capture clips can be configured to hold the covers disclosed herein in close proximity to upper ends of the sidewalls of the trough member such that a 3.2 mm (0.125 inch) probe cannot be inserted into the interior space of the trough member, as required by UL Specification 60950, Safety of Information Technology Equipment.

In addition, the slot formed between the cover portions of system 200 can be sized to allow access to the interior space of the trough member while preventing most debris from entering. For example, a slot of approximately 1.3 cm (0.5 inch) between cover portions can prevent the handle of a typically-sized screw driver from entering the interior space of the trough member when dropped on the closed cover portions, while still allowing fiber cables to be run into the interior space without requiring.the covers to be opener.

Additionally, the systems 100 and 200 can be advantageous in that the covers can be snapped or propped in the closed position and propped into the open position without requiring additional components beyond the hinge clips (and preferably capture clips for system 100) to be added to either the sidewalls or interior space of the trough member.

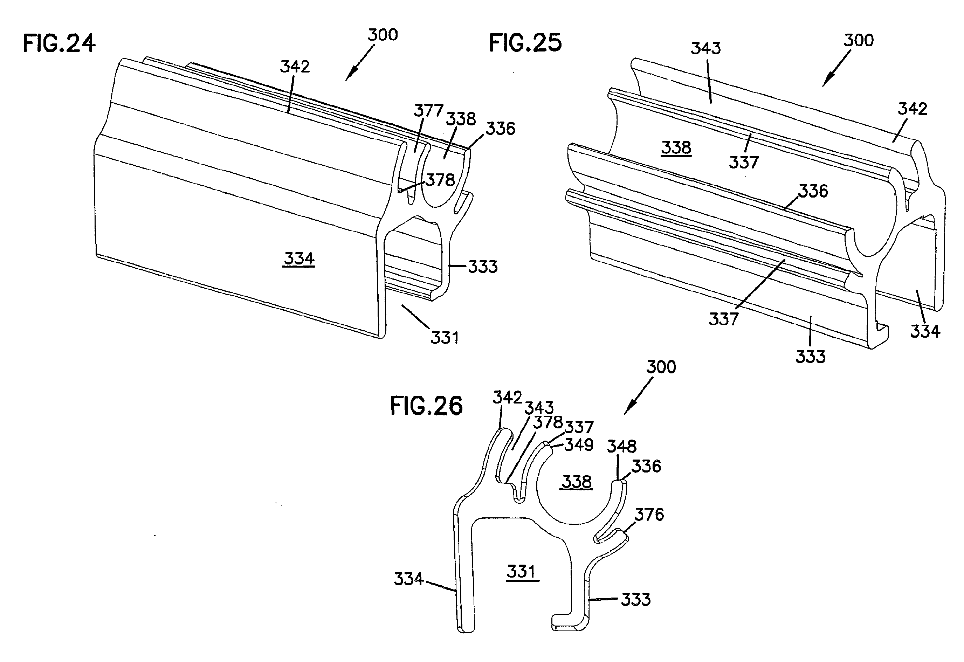

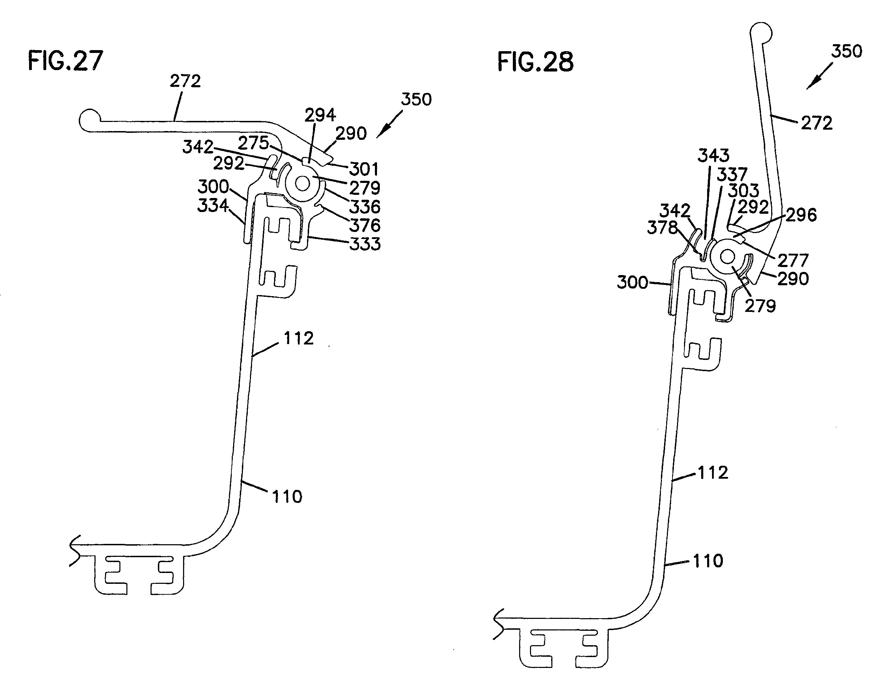

Referring now to Figures 24 through 28, another example embodiment of a hinge clip 300 in a trough system 350 is shown. The hinge clip 300 includes first and second members 333, 334, creating a channel 331 to receive the sidewall 112 of the trough member 110. The hinge clip 300 includes first and second arms 336, 337 creating a socket 338. The channel 331 mounts the hinge clip 300 to the sidewall 112 of the trough member 110. The socket 338 mounts the cover portion 272 to the hinge clip 300. The functions of the channel 331 and the socket 338 are the same as the channel 131 and the socket 138 for the hinge clip 130 noted above.

Adjacent to the first arm 336 is a first landing 376 for use in limiting rotation of the cover portion 272 beyond the fully open position. Adjacent to the second arm 337 is a second landing 378 for use in limiting rotation of the cover portion 272 beyond the closed position. The end 290 of the cover portion 272 defines a projection with an end 301 which engages the first landing 376 to limit the amount of opening of the cover portion 272. The member 292 on the cover portion 272 has an end 303 which engages the second landing 378 to limit the amount of closing of the cover portion 272.

The ends 348, 349 of the first and second arms 336, 337 are received in similar grooves 294, 296 in the cover portion 272 as for the hinge clip 130. In the preferred embodiment, the ends 348, 349 bottom out in the grooves 294, 296 at the same time or about the same time as the ends 301, 303 of the cover portion 272 bottom out on the first and second landings 376, 378.

The hinge clip 300 further includes a third arm 342 which creates a spacing 343 between the third arm 342 and the second arm 337. The spacing 343 receives the member 292 of the cover portion 272. The spacing 343 captures the member 292 when the cover portion 272 is closed. In the preferred embodiment, the spacing 343 and the member 292 are curved. The third arm 342 helps prevent the pivot member 279 from lifting out of the socket 338, such as may tend to occur for larger or heavier cover portions 272 when the cover portion is in the closed position.

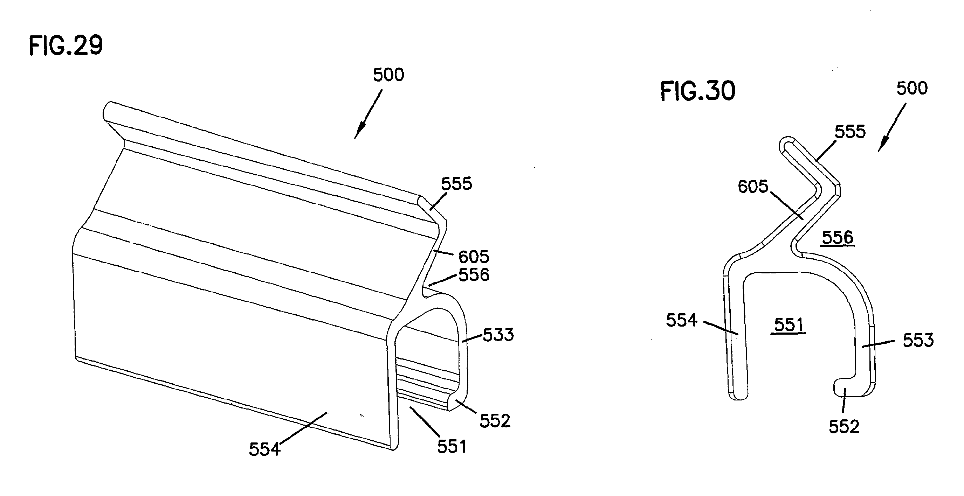

Referring now to Figures 29 through 37, another example embodiment of a trough system 450 is shown. Generally, the trough system 450 includes trough member 110, a hinge clip 400, a capture clip 500, and a cover 474.

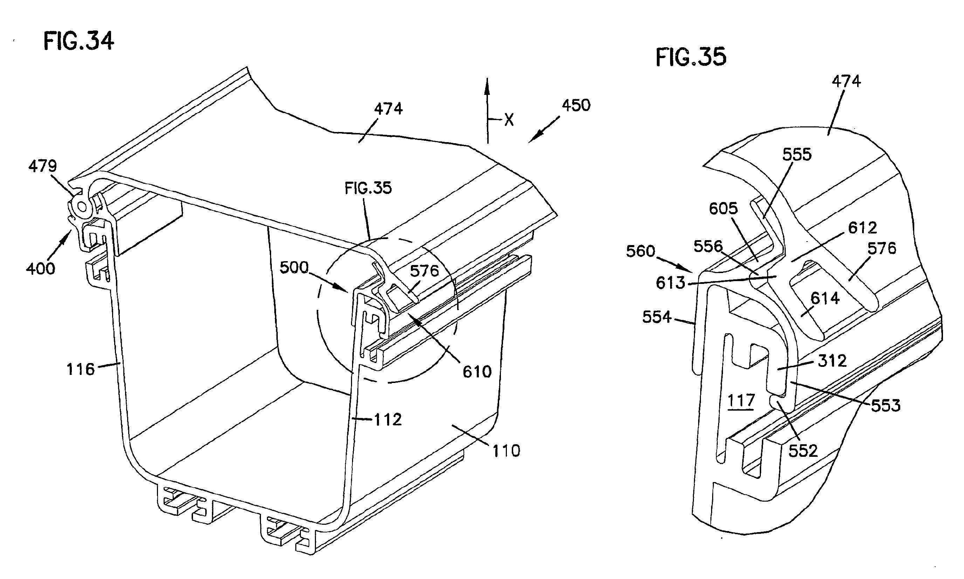

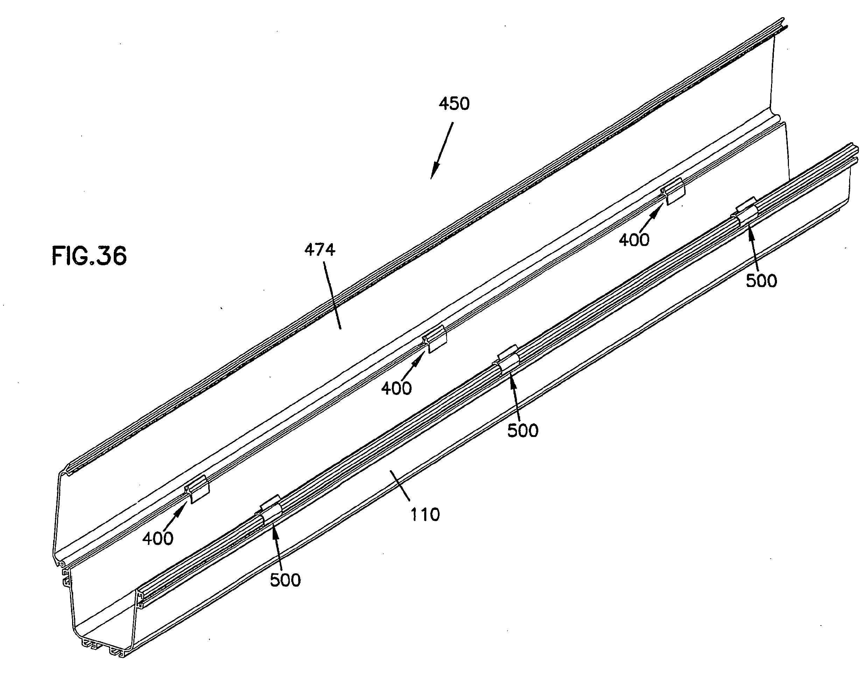

The hinge clip 400 (see Figures 34 and 36) can be configured in a manner similar to any of the hinge clips described herein, such as hinge clips 130 and 300 described above. In the example illustrated, hinge clip 400 is similar to hinge clip 300.

Referring to Figures 29, 30, 34, and 35, the example capture clip 500 is similar in design to capture clip 150 described above. Capture clip 500 includes first and second members 553 and 554, creating a channel 551, and a clip portion 552 extending partially within the slot 117 of trough member 110 to couple the hinge clip 500 to the first sidewall 112 of trough member 110. The hinge clip 500 further includes a projecting portion 605 and a ramp portion 555 extending at an angle with respect to the projecting portion 605. A space between the second member 553 and the projecting portion 605 creates a seat 556, as described further below.

The capture clip 500 can be coupled to the trough member 110, as shown in Figures 34 through 37, in a manner similar to that described above with respect to the capture clip 150. Specifically, the capture clip 500 can be coupled to the sidewall 112 by snapping the capture clip 500 onto the sidewall 112 so that the channel 551 receives the lip 312 of sidewall 112, and the clip portion 552 extends partially into the slot 117. In alternative embodiments, the capture clip 500 can be configured to be slid onto an end of the trough member 110. The capture clip 500 can be removed from the trough member 110 similarly, either by forcing the clip portion 552 out of the slot 117 and then removing the capture clip 500 from the trough member 110, or, alternatively, by sliding the capture clip 500 off an end of the trough member 110.

In one embodiment, the capture clip 500 extends longitudinally between 1 and 5 inches. In a preferred embodiment, the length is approximately 1.75 inches. The capture clip 500 is preferably molded from a plastic material such as, for example, a synthetic thermoplastic polymer such as an acrylonitrile-butadiene-styrene (ABS)/polycarbonate blend. In a preferred embodiment, the capture clip 500 is injection molded and varies in thickness from one end to the other to allow the molded clip to be stripped from the mold. Other manufacturing methods and materials can also be used.

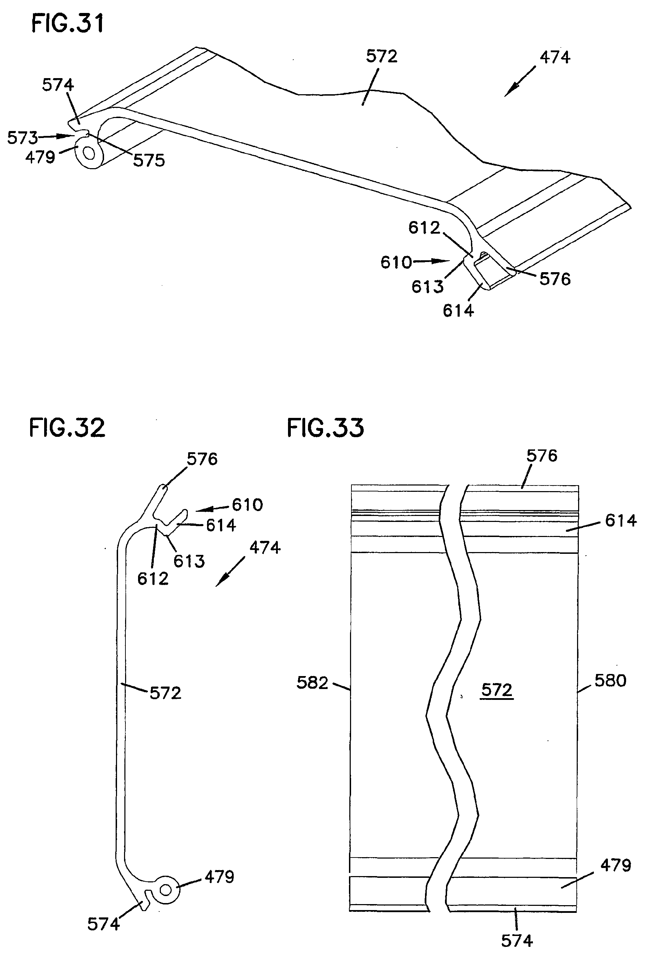

Referring now to Figures 31 through 33, the example cover 474 is described in greater detail. Cover 474 is similar to cover 170 described above, except that cover 474 is asymmetric about its longitudinal axis.

The example cover 474 has first and second ends 574 and 576. As illustrated by the depicted example, the ends 574 and 576 are preferably, but need not be, angled with respect to a main body 572 of the cover 474. The cover 474 includes a pivot member 479 positioned at the first end 574. The pivot member 479 can, for example, be in the form of cylindrical bead, rod, shaft, or other similar shape including a generally round outer circumference. Groove 573 with end 575 is formed generally between the end 574 and the outer circumference of the pivot member 479.

At opposite end 576 of the cover 474, a capture member 610 is formed. Generally, capture member 610 includes first and second members 612 and 614 attached at elbow 613. Generally, the main body 572 and first member 612 form a concave portion, and the first and second members 612 and 614 form a convex portion creating elbow 613. See Figure 32. As described further below with reference to Figures 34 through 37, the elbow 613 of capture member 610 is configured to ride along ramp portion 555 and is received in seat 556 of capture clip 500 upon pivoting of the cover 474 from an open to a closed position.

In the example embodiment, the end 576 projects slightly from the main body 572 of the cover 474 to act as a handle so that a user can grasp the end 576 and pivot the cover 474 from the open and closed positions.

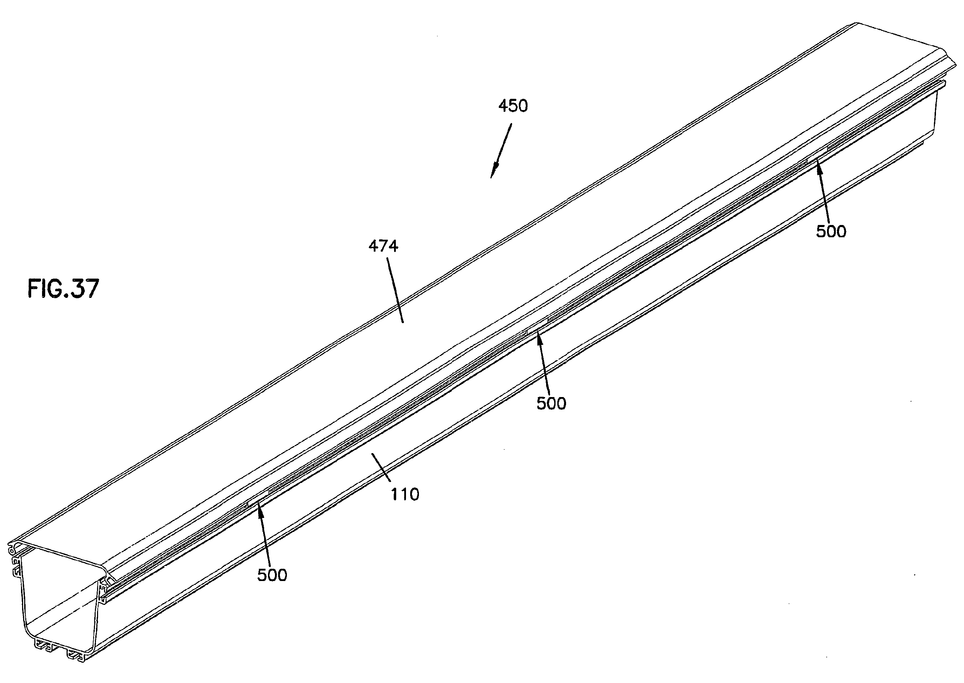

The example cover 474 extends from the first sidewall 112 to the second sidewall 116 to cover the open top of the trough member 110. See Figures 34 and 37. In preferred embodiments, the width of cover 474 is 10, 15 or 30 cm (4, 6, or 12 inches), depending on the width of the trough member. The cover 474 extends lengthwise from a first end 580 to a second end 582. In preferred embodiments, the longitudinal length of the cover 474 (i.e., the distance between ends 580 and 582) is between 0.6 and 2.4 m (2 and 8 feet). In a preferred embodiment, the length is approximately 1.8 m (6 feet).

The cover 474 is preferably extruded from a plastic material such as, for example, a synthetic thermoplastic polymer such as an acrylonitrile-butadiene-styrene (ABS)/polycarbonate blend, although other manufacturing methods (e.g., molding) and materials can also be used.

Referring again to Figures 34 and 35, the cover 474 is illustrated in the closed position. In this position, pivot member 479 of the cover 474 is positioned in the hinge clip 400. In addition, elbow 613 of the capture member 610 is received in seat 556 of the capture clip 500. In this position, the cover 474 extends over the open top of the trough member 110.

The cover 474 can be pivoted from the closed position (see Figures 34, 35, and 38) to the open position (see Figure 36) by grasping the cover 474 at end 576 and exerting force in a direction X (see Figure 34). This causes the elbow 613 of the capture member 610 of the cover 474 to ride first along projecting portion 605 out of the seat 556 and then along ramp portion 555. The cover 474 can then be pivoted about the pivot member 479 in the hinge clip 400 to the open position shown in Figure 36.

The cover 474 can also be pivoted back to the closed position. As the cover 474 nears the closed position, the elbow 613 of the capture member 610 of the cover 474 contacts and rides along the ramp portion 555 of the capture clip 500, which directs the elbow 613 into the seat 556. With the elbow 613 in the seat 556, the cover 474 is once again in the closed position.

The above specification, examples and data provide a complete description of the manufacture and of the invention. Many embodiments of the invention can be made without departing from the scope of the invention as recited in the claims hereinafter appended.

## Claims

1. A cover and hinge assembly (100) for covering a trough member (110) having a base (114) and two sidewalls (112, 116), the assembly comprising:
a hinge clip (130,300) configured to be coupled to a first sidewall (112) of a trough member (110), the hinge clip including a hinge portion (135) having first (136,336) and second (137,337) arms defining a socket (138,338); and
a cover (170) including a main body (172) having first (174,290) and second (176) ends, the cover including a pivot member (178; 279) at the first end; wherein
the pivot member (178,279) is received in the socket (138,338) of the hinge clip (139,300) to allow the cover (170) to be pivoted about the pivot member (178,279) from an open position to a closed position; and
when said hinge clip (130, 300) is coupled to said first side wall (112) said socket (138, 338) opens upwardly to receive said pivot member (178, 279),
**characterized in that**
said pivot member (178, 279) defines a groove (173; 294) at the first end (174,290) between an outer circumference of said pivot member (178,279) and a projection (174) extending away from the main body of the cover (170); and
the first arm (136,336) of the socket (138,338) is received in the groove (173,294) of the cover (170) when the cover (170) is in the open position.

2. The assembly of claim 1, wherein the groove is a first groove (294) defined between an outer circumference of the pivot member and a projection (290). extending away from the main body of the cover;
wherein the outer circumference of the pivot member and a member (292) extending from the cover define a second groove (296);
wherein the second arm of the socket is received in the second groove of the cover when the cover is in the closed position;
wherein an end of the first arm engages an end (275) of the first groove, and an end (301) of the projection engages a first landing (376) on the hinge clip when the cover is in the open position;
wherein an end of the second arm engages an end (277) of the second groove, and an end (303) of the member engages a second landing (378) on the hinge clip when the cover is in the closed position; and
wherein the hinge clip defines a third arm (342) spaced from the second arm to define a spacing (343) for receiving the member of the cover when the cover is in the closed position.

3. The assembly of any of claims 1-2, wherein the hinge clip includes first (333) and second (334) members defining a channel (331) configured to receive a portion of the first sidewall of the trough member to couple the hinge clip to the first sidewall.

4. The assembly of any of claims 1-3, further comprising a capture clip (500) configured to be coupled to a second sidewall (116) of the trough member, the capture clip including a ramp portion (555) and defining a seat (556), wherein a capture member (610) at the second end of the cover rides along the ramp and is received in the seat of the capture clip when the cover is pivoted from the open position to the closed position.

5. The assembly of any of claims 1-3, further comprising a capture clip (150) configured to be coupled to a second sidewall (116) of the trough member, the capture clip including a ramp portion (155) and defining a seat (156), wherein another pivot member (179) at the second end of the cover rides along the ramp and is received in the seat of the capture clip when the cover is pivoted from the open position to the closed position.

6. The assembly of any of claims 4 or 5, wherein the capture clip includes first (153; 553) and second (154; 554) members defining a channel (151; 551) configured to receive a portion of the second sidewall of the trough member to couple the capture clip to the second sidewall.

7. The assembly of any of claims 1 or 3-6, wherein a width of the cover is sized to extend over only a portion of an open top defined by the trough member, and wherein the outer circumference of the pivot member and a member (292) extending from the cover define a second groove (296) so that the second arm (137) of the socket is received in the second groove when the cover is pivoted into the closed position to define the closed position.

8. The assembly of claim 7, wherein the member is sized to contact a surface of the hinge clip as the cover is forced beyond the closed position to maintain the cover in approximately the closed position.

9. A method of covering a trough member (110) having a base (114) and two sidewalls (112, 116), the method comprising:
snapping a hinge clip (130) onto a first sidewall (112) of the trough member (110), the hinge clip defining a socket (138) that opens upwardly to receive a first pivot member (178,279);
positioning a cover (170) including said first pivot member (178,279) over an open portion defined by the trough member (110); and
snapping the first pivot member (178, 279) of the cover into the socket (138, 338) of the hinge clip (130, 300) to allow the cover (170) to pivot about the first pivot member (178, 279) between open and closed positions; wherein
said cover (170) includes a main body (172), having first (174, 290) and second (176) ends and includes said pivot member (178, 279) at the first end,
**characterized in that**
said pivot member (178, 279) defines a groove (173, 294) at the first end (174, 290) between an outer circumference of said pivot member (178, 279) and a projection (174) extending away from the main body of the cover (170); and
the first arm (136, 336) of the socket (138, 338) is received in the groove (173, 294) of the cover (170) when the cover (170) is in the open position.

10. The method of claim 9, further comprising:
snapping a capture clip (150) onto a second sidewall (116) of the trough member, the capture clip defining a seat (156);
moving a second pivot member (179) of the cover into the seat of the capture clip to place the cover in the closed position;
allowing the second pivot member of the cover to ride along a ramp (155) of the capture clip as the cover is pivoted about the first pivot member from the open position to the closed position; and
causing the second sidewall coupled to the capture clip to bow inward as the second pivot member rides along the ramp to allow the second pivot member to clear the ramp and drop into the seat.

## Patentansprüche

1. Abdeckungs- und Anlenkungssystem (100) zum Abdecken eines Wannenteils (110), das eine Basis (114) und zwei Seitenwände (112, 116) hat, wobei das System umfasst:
eine Anlenkklammer (130, 300), die dazu ausgelegt ist, sich mit einer ersten Seitenwand (112) eines Wannenteils (110) zu verbinden, wobei die Anlenkklammer einen Anlenkungsabschnitt (135) mit einem ersten (136, 336) und zweiten (137, 337) Arm aufweist, die eine Fassung (138, 338) definieren; und
eine Abdeckung (170), die einen Hauptkörper (172) mit einem ersten (174, 290) und zweiten Ende (176) aufweist, wobei die Abdeckung ein Schwenkteil (178, 279) am ersten Ende aufweist; wobei
das Schwenkteil (178, 279) in der Fassung (138, 338) der Anlenkklammer (130, 300) aufgenommen ist, um die Abdeckung (170) sich um das Schwenkteil (178, 279) aus einer offenen Stellung in eine geschlossene Stellung verschwenken zu lassen; und
wenn die Anlenkklammer (130, 300) mit der ersten Seitenwand (112) verbunden ist,
sich die Fassung (138, 338) nach oben öffnet, um das Schwenkteil (178, 279) aufzunehmen,
**dadurch gekennzeichnet, dass**
das Schwenkteil (178, 279) eine Nut (173, 294) am ersten Ende (174, 290) zwischen einem Außenumfang des Schwenkteils (178, 279) und einem Vorsprung (174) definiert, der sich vom Hauptkörper der Abdeckung (170) weg erstreckt; und
der erste Arm (136, 336) der Fassung (138, 338) in der Nut (173, 294) der Abdeckung (170) aufgenommen ist, wenn die Abdeckung (170) in der offenen Stellung ist.

2. System nach Anspruch 1, wobei es sich bei der Nut um eine erste Nut (294) handelt, die zwischen einem Außenumfang des Schwenkteils und einem Vorsprung (290) definiert ist, der sich vom Hauptkörper der Abdeckung weg erstreckt;
wobei der Außenumfang des Schwenkteils und ein sich von der Abdeckung erstreckendes Teil (292) eine zweite Nut (296) definieren;
wobei der zweite Arm der Fassung in der zweiten Nut der Abdeckung aufgenommen ist, wenn die Abdeckung in der geschlossenen Stellung ist;
wobei ein Ende des ersten Arms ein Ende (275) der ersten Nut in Eingriff hält, und ein Ende (301) des Vorsprungs einen ersten Absatz (376) an der Anlenkklammer in Eingriff hält, wenn die Abdeckung in der offenen Stellung ist;
wobei ein Ende des zweiten Arms ein Ende (277) der zweiten Nut in Eingriff hält, und ein Ende (303) des Teils einen zweiten Absatz (378) an der Anlenkklammer in Eingriff hält, wenn die Abdeckung in der geschlossenen Stellung ist; und
wobei die Anlenkklammer einen dritten Arm (342) definiert, der vom zweiten Arm beabstandet ist, um einen Abstand (343) zur Aufnahme des Teils der Abdeckung zu definieren, wenn die Abdeckung in der geschlossenen Stellung ist.

3. System nach einem der Ansprüche 1 bis 2, wobei die Anlenkklammer einen ersten (333) und einen zweiten (334) Teil aufweist, die einen Kanal (331) definieren, der dazu ausgelegt ist, einen Abschnitt der ersten Seitenwand des Wannenteils aufzunehmen, um die Anlenkklammer mit der ersten Seitenwand zu verbinden.

4. System nach einem der Ansprüche 1 bis 3, darüber hinaus eine Festsetzklammer (500) aufweisend, die dazu ausgelegt ist, sich mit einer zweiten Seitenwand (116) des Wannenteils zu verbinden, wobei die Festsetzklammer einen Rampenabschnitt (555) aufweist und einen Sitz (556) definiert, wobei ein Festsetzteil (610) am zweiten Ende der Abdeckung die Rampe entlang läuft und im Sitz der Festsetzklammer aufgenommen wird, wenn die Abdeckung aus der offenen Stellung in die geschlossene Stellung verschwenkt wird.

5. System nach einem der Ansprüche 1 bis 3, darüber hinaus eine Festsetzklammer (150) aufweisend, die dazu ausgelegt ist, sich mit einer zweiten Seitenwand (116) des Wannenteils zu verbinden, wobei die Festsetzklammer einen Rampenabschnitt (155) aufweist und einen Sitz (156) definiert, wobei ein anderes Schwenkteil (179) am zweiten Ende der Abdeckung die Rampe entlang läuft und im Sitz der Festsetzklammer aufgenommen wird, wenn die Abdeckung aus der offenen Stellung in die geschlossene Stellung verschwenkt wird.

6. System nach einem der Ansprüche 4 oder 5, wobei die Festsetzklammer ein erstes (153; 553) und zweites (154; 554) Teil aufweist, die einen Kanal (151; 551) definieren, der dazu ausgelegt ist, einen Abschnitt der zweiten Seitenwand des Wannenteils aufzunehmen, um die Festsetzklammer mit der zweiten Seitenwand zu verbinden.

7. System nach einem der Ansprüche 1 oder 3 bis 6, wobei eine Breite der Abdeckung dazu bemessen ist, sich nur über einen Abschnitt einer durch das Wannenteil definierten offenen Oberseite zu erstrecken, und wobei der Außenumfang des Schwenkteils und ein sich von der Abdeckung erstreckendes Teil (292) eine zweite Nut (296) definieren, so dass der zweite Arm (137) der Fassung in der zweiten Nut aufgenommen wird, wenn die Abdeckung in die geschlossene Stellung verschwenkt wird, um die geschlossene Stellung zu definieren.

8. System nach Anspruch 7, wobei das Teil dazu bemessen ist, eine Fläche der Anlenkklammer zu berühren, wenn die Abdeckung zwangsweise über die geschlossene Stellung hinaus bewegt wird, um die Abdeckung in ungefähr der geschlossenen Stellung zu halten.

9. Verfahren zum Abdecken eines Wannenteils (110), das eine Basis (114) und zwei Seitenwände (112, 116) hat, wobei das Verfahren umfasst:
Aufschnappen einer Anlenkklammer (130) auf eine erste Seitenwand (112) des Wannenteils (110), wobei die Anlenkklammer eine Fassung (138) definiert, die sich nach oben öffnet, um ein erstes Schwenkteil (178, 279) aufzunehmen;
Anordnen einer das erste Schwenkteil (178, 279) aufweisenden Abdeckung (170) über einem durch das Wannenteil (110) definierten offen Abschnitt; und
Einschnappen des ersten Schwenkteils (178, 279) der Abdeckung in die Fassung (138, 338) der Anlenkklammer (130, 300), um die Abdeckung (170) sich um das erste Schwenkteil (178, 279) zwischen einer offenen und einer geschlossenen Stellung verschwenken zu lassen; wobei
die Abdeckung (170) einen Hauptkörper (172) mit einem ersten (174, 290) und einem zweiten (176) Ende aufweist und das Schwenkteil (178, 279) am ersten Ende aufweist,
**dadurch gekennzeichnet, dass**
das Schwenkteil (178, 279) eine Nut (173, 294) am ersten Ende (174, 290) zwischen einem Außenumfang des Schwenkteils (178, 279) und einem Vorsprung (174) definiert, der sich vom Hauptkörper der Abdeckung (170) weg erstreckt; und
der erste Arm (136, 336) der Fassung (138, 338) in der Nut (173, 294) der Abdeckung (170) aufgenommen ist, wenn die Abdeckung (170) in der offenen Stellung ist.

10. Verfahren nach Anspruch 9, darüber hinaus umfassend:
Aufschnappen einer Festsetzklammer (150) auf eine zweite Seitenwand (116) des Wannenteils, wobei die Festsetzklammer einen Sitz (156) definiert;
Bewegen eines zweiten Schwenkteils (179) der Abdeckung in den Sitz der Festsetzklammer, um die Abdeckung in die geschlossene Stellung zu versetzen;
Ermöglichen, dass das zweite Schwenkteil der Abdeckung eine Rampe (155) der Festsetzklammer entlang läuft, wenn die Abdeckung um das erste Schwenkteil aus der offenen Stellung in die geschlossene Stellung verschwenkt wird; und
Bewirken, dass die mit der Festsetzklammer verbundene zweite Seitenwand sich nach innen biegt, wenn das zweite Schwenkteil die Rampe entlang läuft, um das zweite Schwenkteil die Rampe freigeben und in den Sitz fallen zu lassen.

## Revendications

1. Ensemble de couvercle et de charnière (100) pour recouvrir un élément de canal (110) comprenant une base (114) et deux parois latérales (112, 116), l'ensemble comprenant :
une attache de charnière (130, 300) configurée pour être couplée à une première paroi latérale (112) d'un élément de canal (110), l'attache de charnière comprenant une partie de charnière (135) présentant un premier bras (136, 336) et un deuxième bras (137, 337) qui définissent un manchon (138, 338) ; et
un couvercle (170) comprenant un corps principal (172) présentant une première extrémité (174, 290) et une deuxième extrémité (176), le couvercle comportant un élément de pivot (178 ; 279) à la première extrémité,
dans lequel l'élément de pivot (178, 279) est reçu dans le manchon (138, 338) de l'attache de charnière (130, 300) de manière à permettre au couvercle (170) de pivoter autour de l'élément de pivot (178, 279) à partir d'une position ouverte jusqu'à une position fermée,
lorsque ladite attache de charnière (130, 300) est couplée à ladite première paroi latérale (112), ledit manchon (138, 338) s'ouvre vers le haut pour recevoir ledit élément de pivot (178, 279),
**caractérisé en ce que** :
ledit élément de pivot (178, 279) définit une rainure (173 ; 294) à la première extrémité (174, 290) entre une circonférence extérieure dudit élément de pivot (178, 279) et une saillie (174) qui s'étend à distance du corps principal du couvercle (170) ; et
le premier bras (136, 336) du manchon (138, 338) est reçu dans la rainure (173, 294) du couvercle (170) lorsque le couvercle (170) se trouve dans la position ouverte.

2. Ensemble selon la revendication 1, dans lequel la rainure est une première rainure (294) qui est définie entre une circonférence extérieure de l'élément de pivot et une saillie (290) qui s'étend à distance du corps principal du couvercle ;
dans lequel la circonférence extérieure de l'élément de pivot et un élément (292) qui s'étend à partir du couvercle définissent une deuxième rainure (296) ;
dans lequel le deuxième bras du manchon est reçu dans la deuxième rainure du couvercle lorsque le couvercle se trouve dans la position fermée ;
dans lequel une extrémité du premier bras engage une extrémité (275) de la première rainure, et une extrémité (301) de la saillie engage un premier palier (376) sur l'attache de charnière lorsque le couvercle se trouve dans la position ouverte ;
dans lequel une extrémité du deuxième bras engage une extrémité (277) de la deuxième rainure, et une extrémité (303) de l'élément engage un deuxième palier (378) sur l'attache de charnière lorsque le couvercle se trouve dans la position fermée ; et
dans lequel l'attache de charnière définit un troisième bras (342) qui est espacé du deuxième bras afin de définir un espace (343) destiné à recevoir l'élément du couvercle lorsque le couvercle se trouve dans la position fermée.

3. Ensemble selon l'une quelconque des revendications 1 ou 2, dans lequel l'attache de charnière comprend un premier élément (333) et un deuxième élément (334) qui définissent un canal (331) configuré pour recevoir une partie de la première paroi latérale de l'élément de canal afin de coupler l'attache de charnière à la première paroi latérale.

4. Ensemble selon l'une quelconque des revendications 1 à 3, comprenant en outre une attache de capture (500) configurée pour être couplée à une deuxième paroi latérale (116) de l'élément de canal, l'attache de capture comprenant une partie de rampe (555) et définissant un siège (556), dans lequel un élément de capture (610) à la deuxième extrémité du couvercle se déplace le long de la rampe et est reçu dans le siège de l'attache de capture lorsque le couvercle pivote de la position ouverte à la position fermée.

5. Ensemble selon l'une quelconque des revendications 1 à 3, comprenant en outre une attache de capture (150) configurée pour être couplée à une deuxième paroi latérale (116) de l'élément de canal, l'attache de capture comprenant une partie de rampe (155) et définissant un siège (156), dans lequel un autre élément de pivot (179) à la deuxième extrémité du couvercle se déplace le long de la rampe et est reçu dans le siège de l'attache de capture lorsque le couvercle pivote de la position ouverte à la position fermée.

6. Ensemble selon l'une quelconque des revendications 4 ou 5, dans lequel l'attache de capture comprend un premier élément (153 ; 553) et un deuxième élément (154 ; 554) qui définissent un canal (151 ; 551) configuré pour recevoir une partie de la deuxième paroi latérale de l'élément de canal afin de coupler l'attache de capture à la deuxième paroi latérale.

7. Ensemble selon l'une quelconque des revendications 1 ou 3 à 6, dans lequel une largeur du couvercle est dimensionnée de manière à s'étendre uniquement au-dessus d'une partie d'un sommet ouvert défini par l'élément de canal, et dans lequel la circonférence extérieure de l'élément de pivot et un élément (292) qui s'étend à partir du couvercle définissent une deuxième rainure (296), de telle sorte que le deuxième bras (137) du manchon soit reçu dans la deuxième rainure lorsque le couvercle pivote dans la position fermée pour définir la position fermée.

8. Ensemble selon la revendication 7, dans lequel l'élément est dimensionné de manière à entrer en contact avec une surface de l'attache de charnière lorsque le couvercle est forcé au-delà de la position fermée afin de maintenir le couvercle approximativement dans la position fermée.

9. Procédé de recouvrement d'un élément de canal (110) comprenant une base (114) et deux parois latérales (112, 116), le procédé comprenant les étapes suivantes :
fixer une attache de charnière (130) sur une première paroi latérale (112) de l'élément de canal (110), l'attache de charnière définissant un manchon (138) qui s'ouvre vers le haut afin de recevoir un premier élément de pivot (178, 279) ;
positionner un couvercle (170) comprenant ledit premier élément de pivot (178, 279) au-dessus d'une partie ouverte définie par l'élément de canal (110) ; et
fixer le premier élément de pivot (178, 279) du couvercle dans le manchon (138, 338) de l'attache de charnière (130, 300) de manière à permettre au couvercle (170) de pivoter autour du premier élément de pivot (178, 279) entre une position ouverte et une position fermée ;
dans lequel ledit couvercle (170) comprend un corps principal (172) présentant une première extrémité (174, 290) et une deuxième extrémité (176) et comprend ledit élément de pivot (178, 279) à la première extrémité,
**caractérisé en ce que** :
ledit élément de pivot (178, 279) définit une rainure (173, 294) à la première extrémité (174, 290) entre une circonférence extérieure dudit élément de pivot (178, 279) et une saillie (174) qui s'étend à distance du corps principal du couvercle (170) ; et
le premier bras (136, 336) du manchon (138, 338) est reçu dans la rainure (173, 294) du couvercle (170) lorsque le couvercle (170) se trouve dans la position ouverte.

10. Procédé selon la revendication 9, comprenant en outre les étapes suivantes :
fixer une attache de capture (150) sur une deuxième paroi latérale (116) de l'élément de canal, l'attache de capture définissant un siège (156) ;
déplacer un deuxième élément de pivot (179) du couvercle dans le siège de l'attache de capture afin de placer le couvercle dans la position fermée ;
permettre au deuxième élément de pivot du couvercle de se déplacer le long d'une rampe (155) de l'attache de capture lorsque le couvercle pivote autour du premier élément de pivot de la position ouverte à la position fermée ; et
amener la deuxième paroi latérale couplée à l'attache de capture à se courber vers l'intérieur lorsque le deuxième élément de pivot se déplace le long de la rampe de manière à permettre au deuxième élément de pivot de quitter la rampe et de tomber dans le siège.
